# EUROPEAN PATENT APPLICATION

(11) **EP 3 366 470 A1**
(43) Date of publication of application: **29.08.2018**
(21) Application number: 16857441.6
(22) Date of filing: 18.10.2016
(51) Int. Cl.: B32B 27/36, B32B 1/02, B32B 7/02

(54) **LAMINATED SHEET AND FORMED CONTAINER**

(30) Priority: 19.10.2015 CN 201510677358
(71) Applicant: Denka Company Limited, Tokyo 103-8338 (JP)
(72) Inventor: TOKUNAGA Hisatsugu, Suzhou Jiangsu 215126 (CN); KUMAKURA Seiichi, Ichihara-city Chiba 290-8588 (JP); MURAOKA Takashi, Isesaki-city Gunma 372-0855 (JP)
(74) Representative: Cabinet Chaillot
(86) International application number: PCT/JP2016/080876
(87) International publication number: WO 2017/069127

(57) **Abstract**

Provided is a perfectly-decomposable, biodegradable barrier sheet that has an excellent thermoformability and oxygen barrier performance, and can transform into carbon dioxide and water via microbial degradation (biodegradation) during composting and thus return to nature. Further provided is a container obtained by thermoforming the barrier sheet. This laminated sheet is provided with an oxygen-barrier resin layer and biodegradable resin layers laminated via an adhesive layer to both surfaces of the oxygen-barrier resin layer. The total percentage by mass of the biodegradable resin layers is at least 90% of the entire sheet, and the percentage by mass of each biodegradable resin layer is at least 10% of the entire sheet. The oxygen transmission rate of the entire sheet does not exceed 10 cc/m²·day. At least one substance selected from polylactic acid, polybutylene succinate, polyhydroxybutyrate, polycaprolactone, polyhydroxyalkanoate, polyglycolic acid, modified polyvinyl alcohol, and starch is used in the biodegradable resin.

## Description

### TECHNICAL FIELD

The present invention relates to a laminated sheet and, more particularly, to a complete-decomposition type biodegradable barrier sheet and a container that is thermoformed from such a sheet.

### BACKGROUND ART

In recent years, the increasing amount of plastic waste has become a major social issue. In the prior art, many polymer materials have been developed to achieve high performance and long stability and thus do not easily degrade in the natural environment. Accordingly, the processing and management of the vast amount of unnecessary plastic waste has become a major social issue on a worldwide scale. Among such plastic wastes, a variety of synthetic resins, for example, polyolefin resins, such as polyethylene and polypropylene, polyester resins, such as polyethylene terephthalate (PET), and polyvinyl chloride, are used to form bulky containers that are especially problematic.

Under such a situation, in the packaging field, there is a demand for plastics made from recyclable material. Consumers have become more conscious of the effect that plastics have on the environment. This has resulted in consumers demanding that recyclable materials be used to make containers for packaging products.

Biodegradable plastics, which can be represented by polyactate (PLA), are usable as materials for a variety of packages but have a higher gas permeability than polyolefin and is thus not suitable for packages of products that deteriorate under the existence of oxygen. Thus, there is a demand for a material that functions to reduce the permeation of oxygen.

For example, patent document 1 describes an article formed from polyactate and an oxygen scavenger. The oxygen scavenger is selected from the following group of:
an oxidable compound and a transition metal catalyst;
ethylene unsaturated hydrocarbon and a transition metal catalyst;
ascorbate;
isoascorbate;
sulfite;
ascorbate and a transition metal catalyst (this catalyst is made of simple metal or salt);
a compound, a complex, or a chelate of a transition metal catalyst;
complex or chelate of polycarboxylic acid, transition metal salicylic acid, or polyamine; and
tannin.

Further, an article may be shaped as a film, a coating, a liner, or any other form.

However, in relation with an article made of the PLA and oxygen scavenger proposed in patent document 1, the oxygen scavenger is used to produce a deoxygenated state in a sealed environment where space is limited. This imposes limits on applications in which thermoforming is performed to reduce oxygen permeation of the ambient air.

Further, patent publication 2 proposes a biodegradable, oxygen-absorbable plastic that includes a biodegradable substrate and reduced iron particles. The reduced iron particles exist in a concentration suitable for absorbing oxygen. A sufficient concentration is designated to substantially lower the deforming temperature as compared to when iron particles do not exist.

However, patent document 2 describes a multilayer laminated construction including a foil layer, an adhesive layer, a PLA layer including an iron-base oxygen absorbent, and an encapsulation layer. It can easily be expected that such a construction will not provide the degradability of a completely degradable type.

### PRIOR ART DOCUMENT

### PATENT DOCUMENTS

Patent Document 1: US Patent No. 6908652
Patent Document 2: WO2011/142871

### SUMMARY OF THE INVENTION

### PROBLEMS THAT ARE TO BE SOLVED BY THE INVENTION

Accordingly, it is an object of the present invention to provide a laminated sheet that has superior thermoforming properties and oxygen barrier properties and can be returned to nature by being transformed to carbon dioxide and water through microbial degradation during composting and to provide a container formed by molding such a laminated sheet.

### MEANS FOR SOLVING THE PROBLEM

A laminated sheet according to the present invention includes an oxygen barrier resin layer and biodegradable resin layers, each laminated by an adhesive layer to one of two surfaces of the oxygen barrier resin layer. A mass percent total of the biodegradable resin layer is greater than or equal to 90% of the entire sheet. A mass percent of each of the biodegradable resin layers is greater than or equal to 10% of the entire sheet. An oxygen permeability of the entire sheet is less than or equal to 10 cc/m²·day.

In the laminated sheet, a biodegradable resin constituting the biodegradable resin layer is one selected from polyactate, polybutylenesuccinate, polyhydroxybutyrate, polycaprolactone, polyhydroxyalkanoate, polyglycolic acid, modified polyvinyl alcohol, and starch.

Preferably, in the laminated sheet, the biodegradable resin used is polyactate.

Further, in the laminated sheet, the entire sheet has a thickness of 200 to 1300 µm, and the oxygen barrier resin layer has a thickness of 10 to 50 µm.

A formed container according to the present invention is formed by thermoforming the laminated sheet.

### EFFECT OF THE INVENTION

The laminated sheet and formed container according to the present invention have superior thermoforming properties and oxygen barrier properties and can be returned to nature by being transformed to carbon dioxide and water through microbial degradation during composting.

### BRIEF DESCRIPTION OF THE DRAWINGS

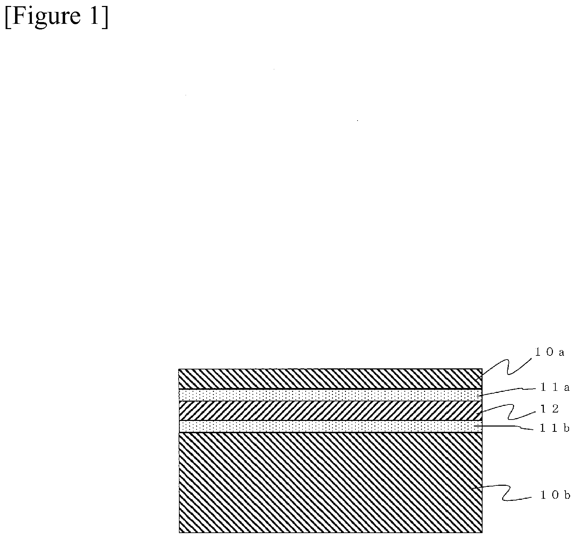

Fig. 1 is a schematic cross-sectional side view showing one example of a lamination construction of a laminated sheet according one embodiment of the present invention.

### EMBODIMENTS OF THE INVENTION

As one embodiment of the present invention, Fig. 1 shows a laminated sheet according to the present invention is formed by laminating onto an oxygen barrier resin layer (12) a biodegradable resin layer (10a), which serves an upper cover layer on the outermost surface, by means of an adhesive layer (11a), and by laminating, in the same manner, a biodegradable resin layer (10b), which serves as a lower cover layer, by means of an adhesive layer (11b) on the opposite side. The entire sheet has a thickness of 200 to 1300 µm, and the oxygen barrier resin layer has a thickness of 10 to 50 µm.

The details will hereafter be described.

### <Laminated Sheet>

As described above, a layer construction of a laminated sheet according to one embodiment of the present invention is a biodegradable resin layer/adhesive layer/oxygen barrier resin layer/adhesive layer/biodegradable resin layer and simply indicated as an upper cover layer/adhesive layer/oxygen barrier layer/adhesive layer/lower cover layer. A layer may be added to the lower cover layer in which the added layer is not disposed as scrap during a process for manufacturing the laminated sheet or formed container according to the present invention. Further, the added layer can be finely pulverized or thermally melted and then re-pelleted as a recycled product.

Although not particularly limited, a print surface may be arranged on the lower cover layer through, for example, directing printing or a process that laminates a printed film.

Preferably, the entire laminated sheet according to the present invention has a thickness of 200 to 1300 µm. When the thickness is less than 200 µm, the thermoformed container will include thin portions and lower the container strength referred to as buckling strength that indicates the resistance to compression and pressure. As a result, for example, when transporting or storing the container in a state accommodating a content, vibration or compression may deform or break the container. When the thickness of the entire sheet exceeds 1300 µm, heat is not sufficiently transmitted in the thickness direction of the sheet during thermoforming. This may result in defective formation.

There is particularly no limit to a method for extrusion-molding the laminated sheet. For example, four or more single-axis or multi-axis extruders may be used with each extruder extruding molten resin material that is laminated through a feed block or a T-die or laminated using a multi-manifold die.

### <Biodegradable Resin Layers (10a, 10b)>

As long as the mass percent total of the biodegradable resin layer to the entire sheet is greater than or equal to 90% of the entire sheet, the biodegradable resin layers may be of a vertically symmetric type in which the upper cover layer and the lower cover layer have the same thickness or a vertically asymmetric type in which the upper cover layer and the lower cover layer have different thicknesses. In the case of a vertically asymmetric type, preferably, the mass percent of each biodegradable resin layer is greater than or equal to 10% of the entire sheet to prevent rupture and breakage of the constituting layers caused by reduction in thickness, particularly, when deep drawing is performed to form the container.

The biodegradable resin forming the biodegradable resin layer according to the present invention may be one selected from polyactate, polybutylenesuccinate, polyhydroxybutyrate, polycaprolactone, polyhydroxyalkanoate, polyglycolic acid, modified polyvinyl alcohol, and starch. Alternatively, the biodegradable resin may be obtained by mixing two or more of these compounds. When mixing two or more of the compounds, there is particularly no limit to the compounding ratio. Further, when using one of these biodegradable resins, in particular, it is preferred that polyactate having versatility be used.

Generally, many biodegradable resins have a low crystallization speed. Thus, it is difficult to increase the crystallization speed for applications that require improved heat resistance and difficult to obtain sheet stiffness with only the biodegradable resin. Thus, although not particularly limited, a modifier may be added such as talc or ethylenebisstearamide (EBS). Preferably, the added amount of these modifiers is 0.1% to 30% relative to the biodegradable resin to obtain a significant modifying effect.

The melt flow rate (hereinafter simply referred to as the MFR) of the biodegradable resin according to the present invention was measured through a generally performed process that measures the amount of resin extruded per ten minutes under constant temperature and load conditions by a piston from a die having a specified diameter set at the bottom of a cylinder. The measurement conditions for the present invention was a temperature setting of 190°C and a load of 2.16 kgf. Preferably, the MRF of the biodegradable resin according to the present invention was 1.0 to 20 g/10 min. When the MRF is less than 1.0 g/10 min, the processability may decrease during sheet extrusion. When the MRF is greater than 20 g/10 min, the drawdown resistance may be adversely affected and cause the sheet to droop when heated during extrusion and container forming. Further, the impact resistance may decrease.

### <Oxygen Barrier Resin Layer (12)>

Representative examples of the oxygen barrier resin layer include ethylene-vinylalcohol copolymer resin, polyamide resin, polyvinyl alcohol, and polyvinylidene chloride. There is no limit to these compounds. Among these compounds, ethylene-vinylalcohol copolymer resin is preferred from the viewpoint of extrusion characteristics.

Ethylene-vinylalcohol copolymer resin is normally obtained by saponifying ethylene-vinyl acetate copolymer. To obtain oxygen barrier characteristics and extrusion characteristics, the ethylene content is 10 mol% to 65 mol% and preferably 20 mol% to 50 mol%, the saponification degree is 90% or greater and preferably 95% or greater.

Examples of a polyamide resin include lactam polymers such as caprolactam and laurolactam; and aminocarboxylic acid polymers such as 6-aminocaproic acid, 11-aminoundecanoic acid, and 12-aminododecanoic acid. Other examples of a polyamide resin include condensation polymers of diamine units and dicarboxylic acid units. Diamine units include aliphatic diamines such as hexamethylendiamine, decamethylenediamine, dodecamethylenediamine, and 2,2,4- or 2,4,4-trimethylhexamethylendiamine; alicyclic diamines such as 1,3- or 1,4-bis(aminomethyl)cyclohexane, and bis(p-aminocyclohexylmethane); and aromatic diamines such as m- or p-xylylenediamine. Dicarboxylic acid units include aliphatic dicarboxylic acids such as adipic acid, suberic acid, and sebacic acid; alicyclic dicarboxylic acids such as cyclohexanedicarboxylic acid, and aromatic dicarboxylic acids such as terephthalic acid and isophthalic acid. Other examples of a polyamide resin include copolymers of the polymers and condensation polymers described above.

Specific examples of polyamide resin include nylon 6, nylon 9, nylon 11, nylon 12, nylon 66, nylon 610, nylon 611, nylon 612, nylon 6T, nylon 6I, nylon MXD6, nylon 6/66, nylon 6/610, nylon 6/6T, and nylon 6I/6T. Among these, nylon 6 and nylon MXD6 are preferred.

The thickness of the oxygen barrier resin layer is preferably 10 to 50 µm and more preferably 20 to 40 µm. When the thickness is less than 10 µm, the oxygen barrier resin layer in the container after thermoforming the sheet will be drastically reduced in thickness, and the required oxygen barrier properties may not be obtained for limiting decreases in the quality caused by the oxidation deterioration of the contents accommodated in the container. If the thickness is greater than 50 µm, when the container that has undergone thermoforming is stamped, outer appearance defects referred to as the so-called whisker-like burrs may be produced.

The oxygen permeability of the entire sheet is less than or equal to 10 cc/m²·day and further preferably 5 cc/m²· day. If the oxygen permeability is greater than 10 cc/m²· day, when oxidation deterioration occurs in the contents of the thermoformed container, the function for limiting oxidation deterioration may not be sufficiently obtained.

### <Adhesive Layers (11a, 11b)>

Preferably, the resin constituting the adhesive layer is a modified polyolefin polymer. Representative examples of a modified polyolefin polymer forming the adhesive layer are obtained under grafting reaction conditions by modifying a polyolefin resin or a polyolefin rubber with a derivative. Polyolefin resins include copolymers of ethylene, propylene, butene-1, 3-methylbutene-1, pentene-1, 4-methylpentene-1, hexene-1, octene-1, and other polyolefins having a carbon number of about 2 to 20 like decene-1 with vinyl compounds such as vinyl acetate, vinyl chloride, acrylic acid, methacrylic acid, acrylic acid ester, methacrylic acid ester, and polystyrene. Polyolefin rubbers include ethylene-propylene copolymer, ethylene-propylenediene copolymer, ethylene-butene-1 copolymer, and propylenebutene-1 copolymer. Derivatives include acrylic acid, methacrylic acid, crotonic acid, isocrotonic acid, maleic acid, fumaric acid, itaconic acid, citraconic acid, an unsaturated carboxylic acid such astetrahydrophthalic acid or its acid halide, amide, imide, anhydride, and ester, more specifically, malonyl chloride, maleimide, maleic anhydride, citraconic anhydride, maleic acid monomethyl, maleic acid dimethyl, and maleic acid glycidyl.

Ethylene resin, propylene resin, or ethylene-propylene or butene-1 copolymer rubber modified by unsaturated dicarboxylic acid or its anhydride, especially, maleic acid or its anhydride, is particularly preferred as the modified polyolefin.

The thickness of each modified polyolefin polymer layer is 5 to 50 µm and more preferably 10 to 30 µm. When the thickness is less than 5 µm, sufficient interlayer adhesion strength may not be obtained. If the thickness is greater than 50 µm, when the container that has undergone thermoforming is stamped, outer appearance defects referred to as the so-called whisker like burrs may be produced.

### <Formed Container>

The formed container in accordance with the present invention is formed by thermoforming the laminated sheet in accordance with the present invention. Examples of thermoforming include typical vacuum forming, pressure forming, plug-assist that applies these processes and has a plug contact one surface of a sheet, and a process referred to as the match molding that has a pair of a male and female mold contact the two surfaces of a sheet although there is no limit to these processes. Further, as a process that heats and softens the sheet prior to molding, known sheet heating processes that can be applied include radiation heating that is non-contact heating using radiation heat produced by an ultrared heater or the like and heat platen heating that has a heated heat platen directly contact a sheet.

Preferably, although the forming temperature during thermoforming is properly set taking into consideration the melting temperature or the like of resin, if the sheet-forming temperature is too low, the shaping state of the thermoforming container will be insufficient. On the other hand, if the sheet-forming temperature is too high, defective melting or the like may occur on the heat platen. Thus, it is preferred that the proper temperature be set.

### <Examples>

The present invention will hereafter be described with further detail giving examples and comparative example. However, the present invention is not limited in any manner to the contents of the examples and the like.

The resin materials used in the examples are as described below.

### (1) biodegradable resin

1. polyactate "4032D" (Manufactured by NatureWorks LLC, density: 1.24 g/cm3, MFR: 4.0 g/10 min. (190°C, 2.16 kgf))
2. polyactate "GH501H" (Manufactured by Kohoku Goukou Co., Ltd., density: 1.24 g/cm3, MFR: 4.5 g/10 min. (190°C, 2.16 kgf))
3. polyactate "REVODE 190" (Hisun Biomaterials Co., Ltd., Density: 1.24 g/cm3, MFR: 2.5 g/ 10 min. (190°C, 2.16 kgf))
4. polybutylenesuccinate resin "FD92" (Manufactured by Mitsubishi Chemical Corporation, density: 1.24 g/cm3, MFR: 4.0 g/10 min. (190°C, 2.16 kgf))

### (2) Oxygen Barrier Resin

ethylene-vinylalcohol copolymer(EVOH) "EVAL J171B" (Manufactured by Kuraray Co. LTD., density: 1.18 g/cm3, MFR:1.7 g/10 min. (190°C, 2.16 kgf), ethylene content 32 mol%)

### (3) adhesive layer resin

1. modified polyester polymer "PRIMALLOY GK320" (Manufactured by Mitsubishi Chemical Corporation, density: 1.03 g/cm3, MFR:10 g/10min. (230°C, 2.16 kgf))
2. modified polyolefin polymer (modified PO) "MODIC F563" (Manufactured by Mitsubishi Chemical Corporation, density: 1.03 g/cm3, MFR:3.0 g/10min. (190°C, 2.16 kgf))

### <Example 1>

Extrusion molding was performed with a feed block using 1. polyactate "4032D" as the biodegradable resin of the upper cover layer and the lower cover layer and 1. modified polyester polymer "PRIMALLOY GK320" as the adhesive layer resin to obtain a multilayer laminated sheet including a layer construction of biodegradable resin layer (10a) 140 µm/adhesive layer (11a) 15 µm/oxygen barrier resin layer (12) 30 µm/adhesive layer (11b) 15 µm/ biodegradable resin layer (10b) 700 µm in which the overall thickness was 900 µm and the mass percent of the biodegradable resin layer was 94% of the entire sheet.

### <Example 2>

In this example, 2. modified polyolefin polymer "MODIC F563" was used as the adhesive layer resin. Otherwise, the obtained multilayer laminated sheet was the same as example 1.

### <Example 3>

In this example, 2. polyactate "GH501H" was used as the biodegradable resin of the upper cover layer and the lower cover layer. Otherwise, the obtained multilayer laminated sheet was the same as example 1.

### <Example 4>

In this example, 3. polyactate "REVODE 190" was used as the biodegradable resin of the upper cover layer and the lower cover layer. Otherwise, the obtained multilayer laminated sheet was the same as example 1.

### <Example 5>

In this example, a mixture of 95 mass percent of resin 1. polyactate "4032D" and 5 mass percent of resin 4. polybutylenesuccinate resin "FD92" was used as the biodegradable resin. Otherwise, the obtained multilayer laminated sheet was the same as example 1.

### <Comparative Example 1>

Extrusion molding was performed with a feed block using 1. polyactate "4032D" as the biodegradable resin of the upper cover layer to obtain a multilayer laminated sheet including a layer construction of biodegradable resin layer (10a) 30 µm/adhesive layer (11a) 15 µm/oxygen barrier resin layer (12) 30 µm/adhesive layer (11b) 15 µm/biodegradable resin layer (10b)110 µm in which the overall thickness was 200 µm and the mass percent total of the biodegradable resin layer was 72% of the entire sheet.

### <Comparative Example 2>

A single-axis extruder was used to obtain a single-layer sheet using 1. polyactate "4032D" as the biodegradable resin of which the overall thickness was 700 µm.

The oxygen permeability of the laminated sheet according to the present invention was measured as described below. The oxygen permeability measurement was performed before and after the laminated sheet was placed in a high-temperature, high-humidity environment.

### [Measurement Method] In compliance with GB/T 1038

Used Equipment: VAC-V1 manufactured by Labthink Instruments Co. Limited
Measurement Condition: 23°C×65%R.H.
Sample Set: Basically, taking into practicability of the container after molding, a sheet sample was set facing a direction in which oxygen permeates from a lower cover layer side of the sample.

The biodegradability of the sheet was evaluated through the method described below.

### [Laminated sheet mass change in soil-buried test]

The sheet was buried in microbially active soil for over 180 days, the outer appearance was observed, and the mass was measured as the degradation degree.

### [Method for evaluating biodegradability]

After storage over 180 days under a compost condition in which the cultivation temperature was 58°C±±°C, the biodegradability was evaluated in compliance with ISO 14855. A degradation degree of 90% or greater was evaluated as complete decomposition.

Table 1 shows the oxygen permeability measurement and biodegradability evaluation result for the laminated sheet of each of the examples and comparative examples.

Polyactate was used as the biodegradable resin in examples 1 to 4, a mixture of polyactate and polybutylenesuccinate was used as the biodegradable resin in example 5. However, there is particularly no limits to such resins. In examples 1 to 4, one selected from polybutylenesuccinate, polyhydroxybutyrate, polycaprolactone, polyhydroxyalkanoate, polyglycolic acid, modified polyvinyl alcohol, and starch can be used as the biodegradable resin or a mixture of two selected from polyactate, polybutylenesuccinate, polyhydroxybutyrate, polycaprolactone, polyhydroxyalkanoate, polyglycolic acid, modified polyvinyl alcohol, and starch can be used as the biodegradable resin. In such cases, the same effects as each of the above examples can be obtained.

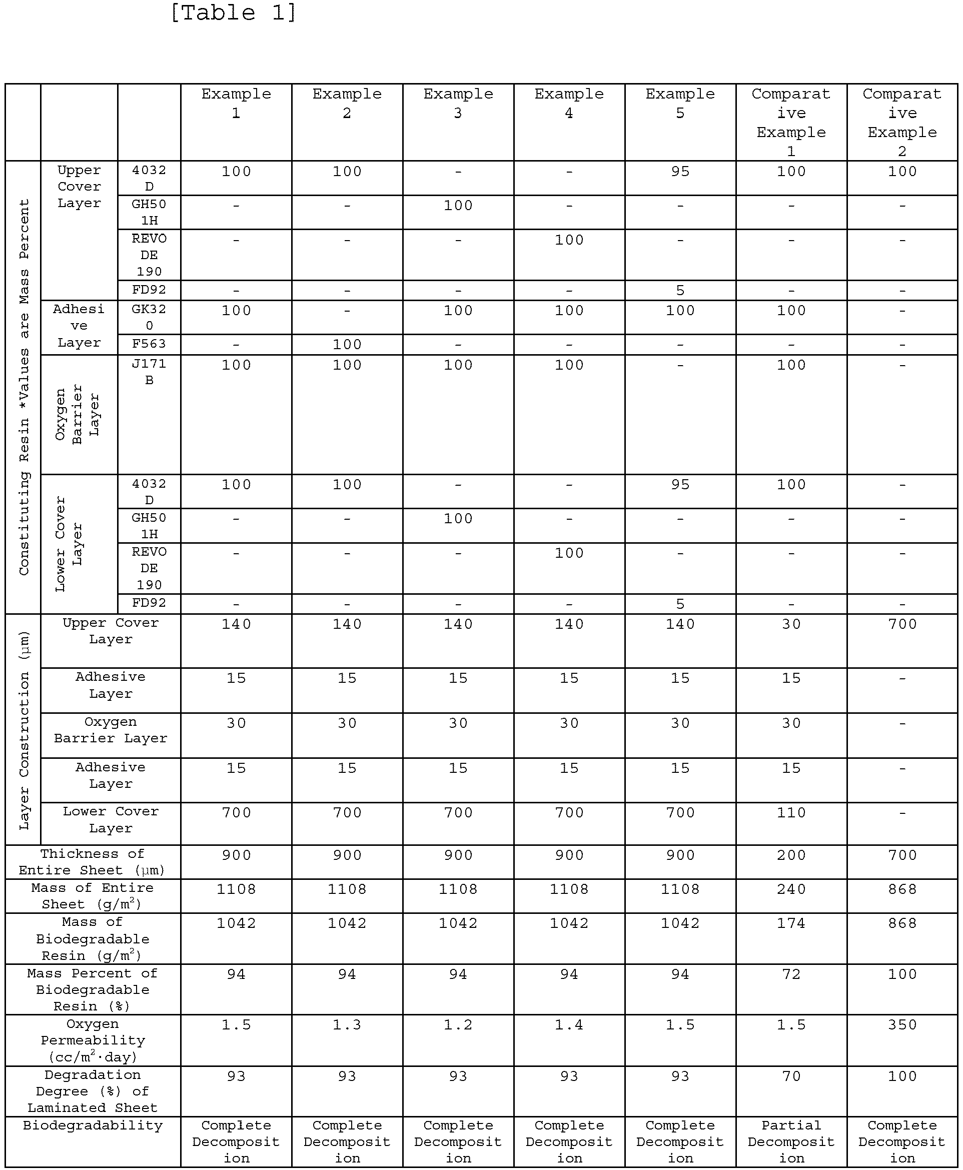

In the results of table 1, in all of examples 1 to 5, the oxygen permeability is low. Further, the degradation degree was 90% or greater indicating complete decomposition. In contrast, in comparative example 1, the oxygen permeability was low. However, the degradation degree was 70% and thus insufficient. In comparative example 2, there was no problem with the biodegradability in which the degradation degree was 100%. However, the oxygen permeability was 350 cc/m²·day and extremely high. Thus, it is understood that the effect for reducing oxygen deterioration, which is affected by oxygen components, was low.

Accordingly, the multilayer sheet formed by the resins of the constructions described in the examples of the present invention provides a complete decomposition type barrier sheet and a container thermoformed from such a sheet. The barrier sheet has superior thermoforming and oxygen barrier characteristics. Further, composting transforms the barrier sheet to carbon dioxide and water through microbe decomposition. Thus, the barrier sheet can be returned to nature.

### Description of Reference Characters

10a biodegradable resin layer
10b biodegradable resin layer
11a adhesive layer
11b adhesive layer
12 oxygen barrier resin layer

## Claims

1. A laminated sheet including an oxygen barrier resin layer and biodegradable resin layers, each laminated by an adhesive layer to one of two surfaces of the oxygen barrier resin layer, the laminated sheet being **characterized in that**:
a mass percent total of the biodegradable resin layer is greater than or equal to 90% of the entire sheet;
a mass percent of each of the biodegradable resin layers is greater than or equal to 10% of the entire sheet; and
an oxygen permeability of the entire sheet is less than or equal to 10 cc/m²·day.

2. The laminated sheet according to claim 1, **characterized in that** a biodegradable resin constituting the biodegradable resin layer is one selected from polyactate, polybutylenesuccinate, polyhydroxybutyrate, polycaprolactone, polyhydroxyalkanoate, polyglycolic acid, modified polyvinyl alcohol, and starch.

3. The laminated sheet according to claim 2, **characterized in that** the biodegradable resin used is polyactate.

4. The laminated sheet according to any one of claims 1 to 3, **characterized in that** the entire sheet has a thickness of 200 to 1300 µm, and the oxygen barrier resin layer has a thickness of 10 to 50 µm.

5. A formed container formed by thermoforming the laminated sheet according to one of claims 1 to 4.
